# FASCICULE DE BREVET EUROPEEN

(11) **EP 1 753 986 B1**
(45) Date de publication et mention de la délivrance du brevet: **20.07.2011**
(21) Numéro de dépôt: 05766717.2
(22) Date de dépôt: 23.05.2005
(51) Int. Cl.: F16H 63/30, B60K 6/365, B60K 6/387, F16H 3/72

(54) **TRANSMISSION INFINIMENT VARIABLE A DERIVATION DE PUISSANCE A DEUX MODES DE FONCTIONNEMENT COMMANDEE PAR UN BALADEUR A CRABOT, POUR VEHICULE AUTOMOBILE**
UNENDLICH VARIABLES GETRIEBE MIT VON EINER GLEITMUFFE GESTEUERTEN KRAFTÜBERTRAGUNG MIT ZWEIFACHEM MODUS FÜR EIN KRAFTFAHRZEUG
INFINITELY-VARIABLE TRANSMISSION WITH DOUBLE MODE POWER TRANSMISSION CONTROLLED BY A SLIDING DOG FOR A MOTOR VEHICLE

(30) Priorité: 26.05.2004 FR 0405686
(43) Date de publication de la demande: 21.02.2007
(73) Titulaire: Renault s.a.s., 92100 Boulogne Billancourt (FR)
(72) Inventeur: PARTHUISOT, Jean-Pierre, F-92000 Nanterre (FR); CASENAZ, Robert, F-95610 Eragny sur Oise (FR)
(86) Numéro de dépôt international: PCT/FR2005/050349
(87) Numéro de publication internationale: WO 2005/119101

(56) Documents cités:
- FR-A- 2 847 014
- GB-A- 1 172 982
- US-A- 3 866 490
- US-A- 5 006 100
- US-A- 5 935 035

## Description

La présente invention est relative à une transmission infiniment variable à dérivation de puissance à deux modes de fonctionnement, pour véhicule automobile équipé d'un moteur thermique.

Une telle transmission à dérivation de puissance permet d'obtenir une variation continue depuis un rapport de marche arrière jusqu'à un rapport de marche avant, en passant par une position particulière dite « neutre en prise », où la vitesse de déplacement du véhicule est nulle, pour un régime quelconque du moteur thermique.

Les transmissions à dérivation de puissance sont de plusieurs types.

Selon un premier type dit « à entrée couplée », la transmission comporte un couple de pignons de dérivation de puissance qui dérivent la puissance à l'entrée du mécanisme et un train d'engrenages épicycloïdal « rassembleur » qui réunit les puissances en sortie du mécanisme. La transmission comporte également un variateur de vitesse.

Dans un autre type dit « à sortie couplée », la transmission comporte un train d'engrenages épicycloïdal diviseur de puissance à l' entrée du mécanisme et un couple de pignons rassembleurs de puissance en sortie du mécanisme. La transmission comporte également un variateur de vitesse.

Enfin, on connaît également des transmissions à dérivation de puissance dites « à deux points d'adaptation », dans lesquelles un premier train d'engrenages épicycloïdal diviseur de puissance est placé à l'entrée de la transmission, tandis qu'un second train d'engrenages épicycloïdal rassembleur de puissance est monté en sortie de la transmission. Là encore, la transmission comporte un variateur de vitesse.

Une transmission infiniment variable (TIV ou IVT en langue anglaise) n'utilise qu'un ou deux de ces trois principes de fonctionnement.

La présente invention est relative à une transmission infiniment variable utilisant deux modes de fonctionnement distincts et comportant un dispositif de changement de mode permettant de passer d'un premier mode de fonctionnement à un deuxième mode de fonctionnement.

On comprend qu'il est intéressant de disposer de deux modes de fonctionnement pour une même transmission, car cela permet d'augmenter la plage des rapports de la transmission et permet en outre de diminuer les dimensions du dispositif variateur de vitesse qui peut comprendre des machines électriques.

De telles architectures de transmission bi-mode, de type connu, présentent cependant l'inconvénient que les changements de mode sont effectués par des embrayages multi-disques disposés sur la sortie de la transmission, de sorte que leur fonctionnement s'accompagne de brusques variations de couple qui sont ressenties désagréablement par les utilisateurs. Un autre inconvénient d'une telle transmission décrite par exemple dans le brevet US-A-5 558 589 ou dans le brevet US-A-5 935 035, réside dans la complexité de l'architecture, liée notamment à la présence d'au moins deux embrayages et un frein.

Dans une précédente demande de brevet français FR-A-2847014 au nom de la demanderesse, on a décrit une transmission infiniment variable selon de préambule de la revendication 1, à deux modes de fonctionnement, du type comportant un variateur électrique et au moins deux voies de dérivation de puissance dont une voie principale relie le moteur thermique aux roues motrices, et une voie secondaire est connectée au variateur électrique, de sorte qu'au moins deux modes de fonctionnement peuvent être appliqués sur la voie de dérivation de puissance du variateur électrique.

La transmission infiniment variable décrite dans cette demande de brevet antérieure comprend un premier train d'engrenages épicycloïdal composé qui permet de connecter le moteur thermique aux roues du véhicule selon une voie principale de dérivation de puissance et un train d'engrenages épicycloïdal simple qui permet de réaliser la dérivation de puissance ainsi qu'un deuxième train d'engrenages épicycloïdal composé, de façon à réaliser un système de changement de mode entre au moins deux modes de fonctionnement de la transmission infiniment variable.

La transmission décrite dans cette demande de brevet antérieure comprend deux dispositifs de couplage/découplage qui permettent à deux arbres de la transmission d'être indépendamment bloqués ou non en rotation, assurant ainsi chaque fois l'un des modes de fonctionnement de la transmission.

Lors d'un changement de mode, les deux dispositifs de couplage/découplage sont pilotés indépendamment par deux actionneurs qui peuvent être mus par une force électrique ou une force hydraulique. La commande des deux actionneurs se fait de sorte que les deux modes soient engagés simultanément, les deux arbres précités de la transmission étant simultanément bloqués en rotation.

Dans une réalisation pratique d'une telle transmission, la commande du changement de mode est réalisée au moyen de freins hydrauliques multidisques. Cela nécessite un schéma hydraulique relativement complexe pour alimenter convenablement les deux freins hydrauliques dont l'encombrement est en outre un inconvénient. De plus, la consommation d'énergie nécessaire à l'actionnement et au maintien en position fermée des garnitures des freins utilisés entraîne une dégradation du rendement de la transmission. Il en est de même du couple de frottement des freins en position ouverte.

Enfin, en cas de défaillance du circuit d'alimentation hydraulique, les deux freins se placent automatiquement en position ouverte. Dans ce cas, la transmission est dite « ouverte » et certaines opérations, telles que le démarrage du moteur thermique du véhicule, par une des deux machines électriques, ne peuvent être réalisées.

La présente invention a pour objet une transmission infiniment variable à deux modes de fonctionnement, qui supprime ces inconvénients.

La présente invention a également pour objet une telle transmission dans laquelle le rendement de la transmission est amélioré.

La présente invention a également pour objet une telle transmission dans laquelle chaque mode de fonctionnement est maintenu de manière stable même en cas de défaillance de l'alimentation des moyens de pilotage du dispositif de changement de mode.

La présente invention a également pour objet de simplifier l'architecture de la transmission de façon à réduire son encombrement ainsi que son coût de fabrication.

La présente invention a également pour objet une transmission infiniment variable à deux modes de fonctionnement, dans laquelle le basculement entre les deux modes de fonctionnement se fait de manière particulièrement simple.

La transmission infiniment variable à dérivation de puissance à deux modes de fonctionnement selon l'invention, pour véhicule automobile équipé d'un moteur thermique, est du type comprenant une première voie principale de dérivation de puissance avec un train d'engrenages épicycloïdal composé reliant le moteur thermique aux roues du véhicule, une deuxième voie de dérivation de puissance avec un premier train d'engrenages épicycloïdal simple, deux machines électriques réalisant un variateur de vitesse continu et un deuxième train d'engrenages épicycloïdal simple de changement de mode ainsi qu'un ensemble de couplage/découplage capable de bloquer ou libérer un organe du deuxième train d'engrenages épicycloïdal de changement de mode, selon le mode de fonctionnement.

L'ensemble de couplage/découplage comprend un baladeur muni d'une denture de crabot, pouvant être déplacé en translation par un vérin hydraulique et deux ensembles de dents de crabots respectivement solidaires d'un organe du deuxième train d'engrenages épicycloïdal de changement de mode.

Le pilotage d'un tel baladeur est particulièrement facile à réaliser ce qui simplifie la construction de la transmission. De plus, le rendement de la transmission se trouve amélioré, la puissance étant transmise par les crabots sans aucun risque de glissement relatif et sans la nécessité d'appliquer un effort permanent sur des disques de frein.

Le vérin hydraulique peut comprendre un piston et deux chambres d'alimentation hydraulique situées de part et d'autre de la partie active du piston.

Le piston peut être relié au baladeur, par exemple, par l'intermédiaire d'une rondelle élastique.

Dans un mode de réalisation avantageux, le vérin hydraulique est situé axialement sur un seul côté du baladeur, ce qui rend la construction plus compacte.

D'une manière générale, le baladeur peut occuper deux positions, dans chacune desquelles la denture de crabot du baladeur est en prise avec un seul ensemble de dents de crabot d'un organe du deuxième train d'engrenages épicycloïdal de changement de mode. Ainsi, la transmission se trouve dans l'un ou l'autre de ses modes, selon la position du baladeur.

De préférence, dans une première position du baladeur, la denture de crabot du baladeur est en prise avec la denture du planétaire du deuxième train d'engrenages épicycloïdal de changement de mode et dans une deuxième position, la denture de crabot du baladeur est en prise avec le porte-satellites du deuxième train d'engrenages épicycloïdal de changement de mode.

Dans tous les cas, la denture de crabot du baladeur est telle qu'elle est en prise avec les deux ensembles de dents de crabots respectivement solidaires des organes du train de changement de mode lors du passage entre ses deux positions. Il suffit par exemple que la longueur axiale de la denture de crabot du baladeur soit choisie pour entrer en prise avec un ensemble de dents alors qu'elle est encore en prise avec l'autre ensemble de dents. De cette manière, les deux organes du train de changement de mode sont immobilisés en rotation par le baladeur lors des changements de mode.

Un dispositif de maintien à billes et ressorts peut coopérer avec la baladeur pour le maintenir en position dans chacune de ses deux positions.

Dans tous les cas, le baladeur reste ainsi en position, avec un mode engagé, lorsque par exemple, l'alimentation en huile du vérin hydraulique, est défectueuse ou insuffisante, ce qui représente un facteur de sécurité pour l'utilisation de la transmission.

L'étanchéité des chambres d'alimentation hydraulique peut être assurée par des joints de différents types, par exemple des joints toriques ou encore des joints à lèvres.

L'invention sera mieux comprise à l'étude d'un mode de réalisation particulier pris à titre d'exemple nullement limitatif et illustré par les dessins annexés, sur lesquels :
- la figure 1 illustre schématiquement les principaux éléments fonctionnels d'une transmission infiniment variable selon l'invention ;
- la figure 2 illustre schématiquement un mode de réalisation pratique d'une telle transmission ; et
- la figure 3 montre en coupe partielle un exemple de réalisation pratique du dispositif de pilotage de changement de mode.

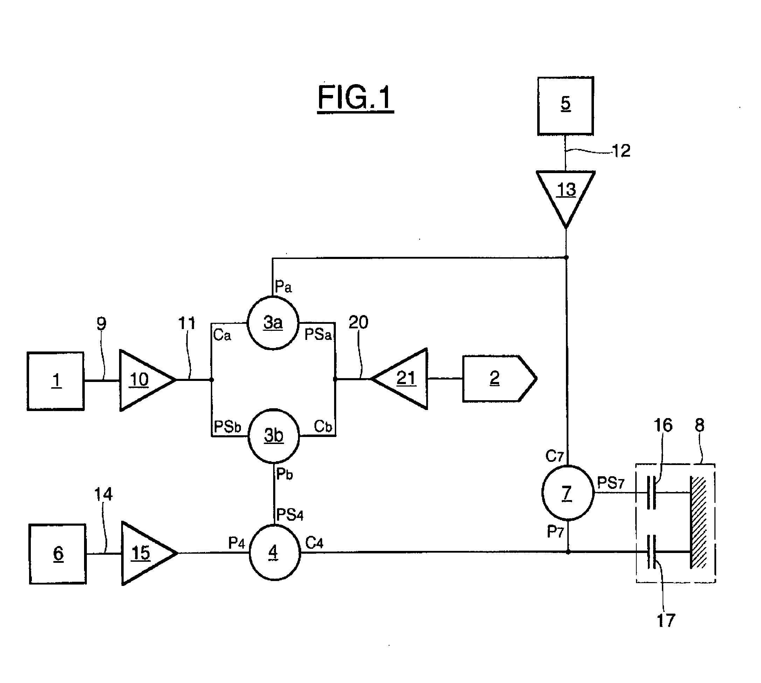

Telle qu'elle est illustrée sur le schéma fonctionnel de la figure 1, la transmission infiniment variable est installée entre un moteur thermique 1 qui constitue un groupe motopropulseur d'un véhicule automobile et l'essieu 2 des roues motrices du véhicule qui constitue l'élément entraîné. La transmission comprend une première voie principale de dérivation de puissance avec un train d'engrenages épicycloïdal composé 3a, 3b. La couronne Ca du train d'engrenages 3a est solidaire du porte-satellites PSb du train d'engrenages 3b. De même, la couronne Cb du train d'engrenages 3b est solidaire du porte-satellites PSa du train d'engrenages 3a.

Une deuxième voie de dérivation de puissance comprend un premier train d'engrenages épicycloïdal simple référencé 4. Deux machines électriques, référencées 5 et 6 respectivement, constituent un variateur de vitesse continu. Enfin, un deuxième train d'engrenages épicycloïdal simple référencé 7, jouant le rôle de dispositif de changement de mode, est associé à un ensemble 8 de couplage/découplage et complète la structure essentielle de la transmission.

La puissance fournie sur l'arbre de sortie 9 du moteur thermique 1 traverse un réducteur 10 et est fournie directement sur l'entrée 11 du train composé 3a, 3b. En sortie 20 de la transmission, la puissance traverse un réducteur 21 avant d'être amenée aux roues 2.

La première machine électrique 5 transmet une puissance par son arbre de sortie 12 à travers un réducteur 13 qui est relié, d'une part, au planétaire Pₐ du premier train d'engrenages 3a et, d'autre part, à la couronne C₇ du train d'engrenages 7 de changement de mode.

La deuxième machine électrique 6 transmet une puissance par son arbre de sortie 14 à travers un réducteur 15 connecté directement au planétaire P₄ du train d'engrenages 4. Le porte-satellites PS₄ de ce train d'engrenages simple 4 est solidaire du planétaire P_{b} du train d'engrenages 3b. La couronne du train d'engrenages simple 4 est solidaire du planétaire P₇ du train d'engrenages de changement de mode 7.

L'ensemble 8 de couplage/découplage comprend deux systèmes à crabots 16, 17. Le système à crabot 16 peut immobiliser le porte-satellites PS₇ du train de changement de mode 7. Le système à crabot 17 peut, quant à lui, immobiliser le planétaire P₇ du train de changement de mode 7, et, de ce fait, également la couronne C₄ du train d'engrenages 4 dont elle est solidaire.

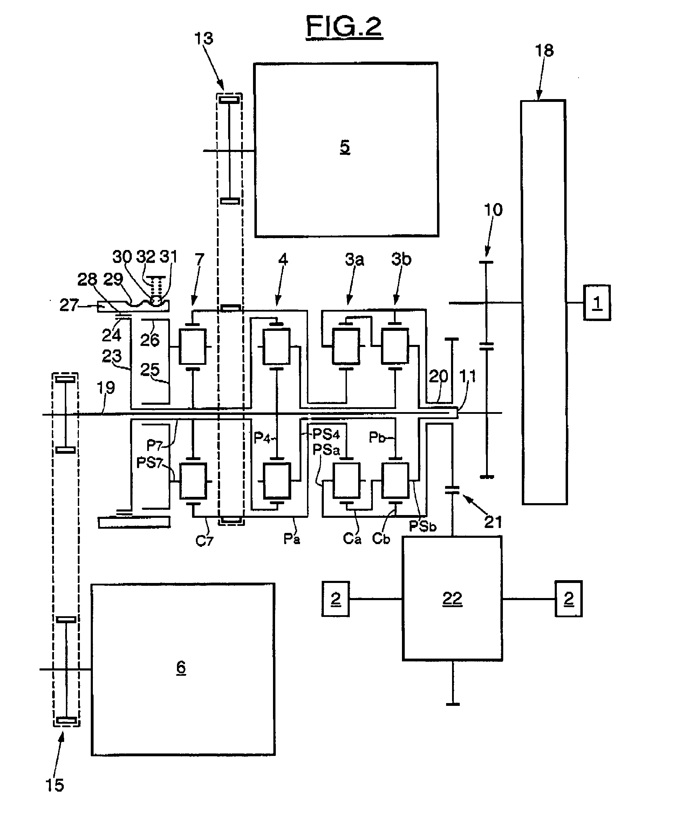

Sur la figure 2, où les éléments identiques portent les mêmes références, le moteur 1 est relié, par l'intermédiaire d'un dispositif amortisseur 18, à un ensemble d'engrenages réducteur 10 qui transmet la puissance au point d'entrée 11 connecté à la fois au porte-satellites PSb et à la couronne Cₐ. La machine électrique 5 transmet sa puissance par le réducteur 13 sur le planétaire Pa du train d'engrenages épicycloïdal 3a et sur la couronne C₇ du train d'engrenages épicycloïdal 7 de changement de mode.

La machine électrique 6 transmet par le réducteur 15 sa puissance par l'arbre central 19 au planétaire P₄ du train d'engrenages épicycloïdal 4. Enfin, la sortie 20 de la transmission reçoit la puissance par le point commun entre la couronne C_{b} du train d'engrenages épicycloïdal 3b et du porte-satellites PSa du train d'engrenages épicycloïdal 3a. Cette sortie est reliée par les engrenages réducteurs 21 à un différentiel 22, puis aux roues 2 du véhicule.

Le planétaire P₇ du train de changement de mode 7 est solidaire d'un organe annulaire 23 qui porte sur sa périphérie un ensemble de dents de crabots 24. De la même manière, le porte-satellites PS₇ du train de changement de mode 7 est solidaire d'un organe annulaire 25 qui comporte sur sa périphérie un ensemble de dents de crabots 26. Un baladeur 27 peut se déplacer axialement parallèlement à l'axe de la transmission. Le baladeur 27 présente un ensemble de dents de crabots 28 ainsi que des cavités 29 et 30 qui peuvent coopérer alternativement avec des billes de retenue 31 soumises à l'action de ressorts 32.

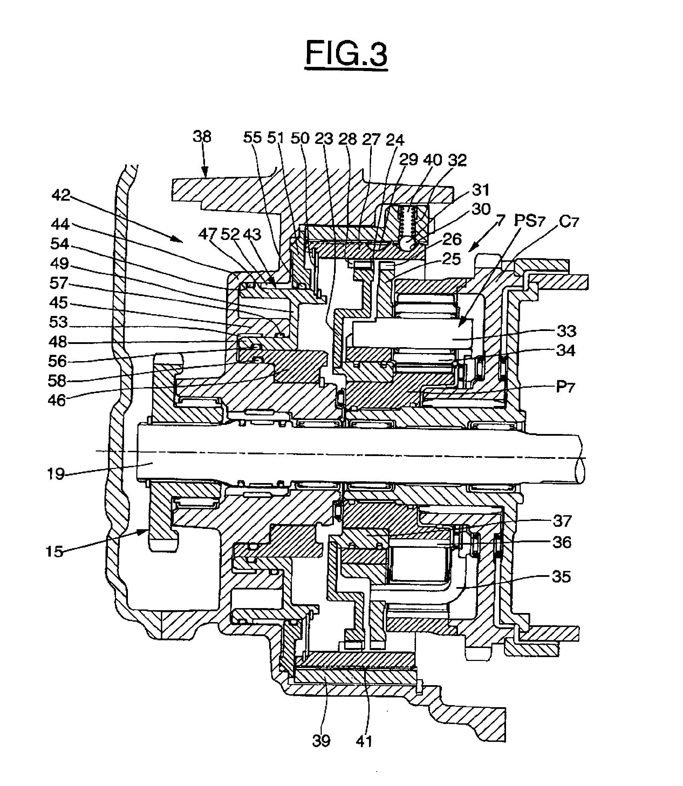

La figure 3 montre, à titre d'exemple, une réalisation pratique possible d'une telle structure.

Les organes similaires portent les mêmes références. Sur la figure 3, qui est une coupe partielle d'une transmission, on a représenté essentiellement le train d'engrenages épicycloïdal de changement de mode, référencé 7 sur la figure 2, les autres éléments de la transmission étant omis pour simplifier la figure. On retrouve sur la figure 3 le porte-satellites PS₇ du train de changement de mode 7, dont l'un des axes 33 ainsi qu'un pignon satellite 34 sont visibles. L'organe annulaire 25 est rendu solidaire du porte-satellites PS₇ par un élément de fixation 35. On voit également sur la figure 3 le planétaire P₇ du train de changement de mode 7 dont la denture 36 engrène avec les pignons-satellites tels que le pignon 34. L'organe annulaire 23 est solidaire du planétaire P₇ par l'intermédiaire d'un anneau de fixation 37.

Le baladeur 27 est mobile en translation axiale par rapport au bâti fixe 38 de la transmission par l'intermédiaire d'une pièce annulaire de support 39 qui présente un ou plusieurs logements 40 pour des ressorts 32 agissant sur des billes de retenue 31, l'ensemble réalisant un dispositif de maintien à billes. Sur la coupe de la figure 3, seule une bille 31 est visible. Des nervures transversales 41, pratiquées respectivement sur le baladeur 27 à sa périphérie externe et à l'intérieur de l'alésage de l'anneau de fixation 39, permettent le coulissement axial du baladeur 27 et son immobilisation en rotation.

Le mouvement de coulissement du baladeur 27 est assuré par un vérin hydraulique à double effet 42, constitué par un piston mobile 43 se déplaçant par rapport à un ensemble de parois fixes solidaires du bâti 38 jouant le rôle de cylindre. Ces parois fixe comprennent en particulier une paroi extérieure 44 formant une première couronne annulaire extérieure, une paroi intermédiaire 45 formant une deuxième couronne annulaire intemédiaire et une paroi interne 46 formée sur une pièce intermédiaire solidaire du bâti 38. Le piston 43 lui-même présente une couronne annulaire externe 47 et une couronne annulaire interne 48, lesquelles sont reliées entre elles par un flasque radial 49. Le piston 43 est relié mécaniquement au baladeur 27 par une rondelle élastique 50. Enfin, le montage est complété par un flasque radial 51 qui assure le guidage externe du piston 43.

Le déplacement du piston 43 est provoqué par une pression hydraulique pouvant s'exercer dans deux chambres d'alimentation hydrauliques 52 et 53. On notera que la chambre hydraulique 52 est définie entre la paroi annulaire 44 solidaire du bâti 38 et la couronne annulaire 47 du piston 43 et fermée par le piston 43. La chambre hydraulique 53 est définie entre l'alésage interne de la paroi intermédiaire 45 solidaire du bâti 38 et la face cylindrique externe de la couronne annulaire intérieure 48 du piston 43. De cette manière, les deux chambres hydrauliques de commande 52, 53 sont définies comme un intervalle annulaire de faible épaisseur entre deux parois annulaires en regard. La chambre 53, qui est radialement vers l'intérieur permet, lorsque la pression du fluide hydraulique y est augmentée, de déplacer le piston 43 de la gauche vers la droite par rapport à la figure 3, c'est-à-dire de provoquer un déplacement du baladeur 27 en-dehors de la position qu'il occupe sur la figure 3, et ce à l'encontre de la force de maintien exercée par les billes 31. Le déplacement en sens inverse du piston 43, c'est-à-dire de la droite vers la gauche sur la figure 3, est obtenu en alimentant en fluide hydraulique sous pression, l'autre chambre d'alimentation 52 située radialement à l'extérieur.

L'étanchéité des chambres d'alimentation 52, 53 est assurée, dans l'exemple illustré, par des joints toriques référencés 54 et 55 pour la chambre 52, et référencés 56, 57 et 58 pour la chambre 53.

Les joints toriques peuvent bien entendu être remplacés par des joints à lèvres surmoulées ou des joints à quatre lobes qui permettent, malgré un coût plus élevé, d'obtenir une meilleure étanchéité ainsi qu'un frottement moindre.

On notera que le piston 43 est monté dans le bâti 38 de façon à se situer entièrement d'un côté du baladeur 27, ce qui, par rapport aux structures habituelles de commande de freins ou d'embrayages hydrauliques, simplifie notablement l'architecture de la transmission et permet d'obtenir un montage plus compact.

Le passage d'un mode de fonctionnement de la transmission à un autre se fait de manière réversible par un simple changement d'alimentation des chambres 52 et 53 par des conduites de pression, non représentées sur la figure.

A l'état de repos, la denture de crabot 28 du baladeur 27 est engagée avec la denture 24 solidaire du planétaire P₇ du train de changement de mode 7. Cette position est illustrée sur la figure 3. En alimentant la chambre 53, l'huile sous pression exerce une poussée axiale sur le piston 43 qui se déplace de la gauche vers la droite sur la figure 3, et entraîne dans son déplacement le baladeur 27 à l'encontre de la force de maintien des billes 31. Lors de ce passage d'un mode de fonctionnement à l'autre mode de fonctionnement, la denture de crabot 28 du baladeur 27 passe par un état où elle engrène à la fois avec la denture 24 solidaire du planétaire P₇ et avec la denture 26 solidaire du porte-satellites PS₇. Dans cet état, les deux modes sont donc simultanément enclenchés, le planétaire P₇ et le porte-satellites PS₇ étant simultanément immobilisés en rotation par le baladeur 27.

L'alimentation de la chambre 53 se poursuivant, le piston 43 poursuit son déplacement et continue sa poussée sur le baladeur 27 jusqu'à ce que celui-ci occupe la position dans laquelle les billes 31 pénètrent dans les logements 29. Dans cette position, la denture de crabot 28 du baladeur 27 engrène exclusivement avec la denture 26 solidaire du porte-satellites PS₇, ce qui place la transmission dans son deuxième mode de fonctionnement.

On notera que dans les deux modes de fonctionnement, le baladeur 27 est maintenu dans un état stable grâce aux billes 31 actionnées par leurs ressorts 32 et logées alternativement dans les logements 29 ou 30.

Une défaillance dans l'alimentation hydraulique n'a donc pas d'influence sur l'état de la transmission qui reste dans le mode enclenché.

De plus, le rendement de la transmission de puissance est amélioré en raison de l'existence des dentures de crabots qui transmettent la puissance par conjugaison de forme mécanique et non par friction, comme c'était le cas lors de l'utilisation de freins ou d'embrayages hydrauliques.

Le changement de mode inverse du précédent se fait par alimentation de la chambre hydraulique 52 qui ramène le piston 43 dans la position illustrée sur la figure 3.

On notera que l'agencement du piston 43 et des chambres de commande 52, 53 est fait de sorte que le volume desdites chambres soit le plus faible possible, de façon à minimiser le volume de remplissage et donc la durée de déplacement du baladeur 27 et le temps de crabotage.

## Revendications

1. Transmission infiniment variable à dérivation de puissance à deux modes de fonctionnement pour véhicule automobile équipé d'un moteur thermique, du type comprenant une première voie principale de dérivation de puissance avec un train d'engrenages épicycloïdal composé (3a, 3b) reliant le moteur thermique (1) aux roues du véhicule (2), une deuxième voie de dérivation de puissance avec un premier train d'engrenages épicycloïdal simple (4), deux machines électriques (5, 6) réalisant un variateur de vitesse continu et un deuxième train d'engrenages épicycloïdal simple (7) de changement de mode ainsi qu'un ensemble de couplage/découplage (16, 17) capable de bloquer ou libérer un organe du deuxième train d'engrenages épicycloïdal de changement de mode, selon le mode de fonctionnement, **caractérisé en ce que** l'ensemble de couplage/découplage comprend un baladeur (27) muni d'une denture de crabot (28), pouvant être déplacé en translation par un vérin hydraulique (42) et deux ensembles de dents de crabots (24, 26) respectivement solidaires d'un organe du deuxième train d'engrenages épicycloïdal (7) de changement de mode, le baladeur (27) étant configuré pour pourvoir occuper deux positions, dans chacune desquelles la denture de crabot du baladeur est en prise avec un seul ensemble de dents de crabot d'un organe du deuxième train d'engrenages épicycloïdal (7) de changement de mode.

2. Transmission selon la revendication 1, **caractérisée par le fait que** le vérin hydraulique (42) comprend un piston (43) et deux chambres d'alimentation hydraulique (52, 53) situées de part et d'autre de la partie active du piston.

3. Transmission selon la revendication 2, **caractérisée par le fait que** le piston est relié au baladeur par l'intermédiaire d'une rondelle élastique (50).

4. Transmission selon l'une quelconque des revendications précédentes, **caractérisée par le fait que** le vérin hydraulique (42) est situé axialement sur un côté du baladeur.

5. Transmission selon l'une des revendications précédentes, **caractérisée par le fait que** la denture de crabot du baladeur (27) est telle qu'elle est en prise avec les deux ensembles de dents de crabots respectivement solidaires des organes du train de changement de mode lors du passage entre ses deux positions.

6. Transmission selon l'une des revendications précédentes, **caractérisée par le fait qu'**un dispositif de maintien à billes (31) et ressorts (32) coopère avec le baladeur (27) pour le maintenir en position dans chacune de ses deux positions.

7. Transmission selon la revendication 2, **caractérisée par le fait que** l'étanchéité des chambres d'alimentation hydraulique est assurée par des joints toriques (54, 55, 56, 57, 58).

8. Transmission selon la revendication 5, **caractérisée par le fait que** dans une première position du baladeur, la denture de crabot (28) du baladeur (27) est en prise avec la denture du planétaire (P₇) du deuxième train d'engrenages épicycloïdal de changement de mode et dans une deuxième position, la denture de crabot (28) du baladeur (27) est en prise avec le porte-satellites (PS₇) du deuxième train d'engrenages épicycloïdal de changement de mode.

## Claims

1. Infinitely variable transmission with power branching and two operating modes for a motor vehicle equipped with a combustion engine, of the type comprising a first main power branching path with a compound epicyclic gear train (3a, 3b) linking the combustion engine (1) to the wheels (2) of the vehicle, a second power branching path with a first simple epicyclic gear train (4), two electrical machines (5, 6) forming a continuous speed controller and a second simple epicyclic gear train (7) for mode changing, together with an engagement/disengagement unit (16, 17) capable of locking or releasing a member of the second epicyclic gear train for mode changing, according to the operating mode, **characterized in that** the engagement/disengagement unit comprises a sliding sleeve (27) provided with dog toothing (28) which can be displaced by a hydraulic actuator (42) and two sets of dog teeth (24, 26), each fixed to a member of the second epicyclic gear train (7) for mode changing, the sliding sleeve (27) being configured so that it can occupy two positions, in each of which the dog toothing of the sliding sleeve engages with only one set of dog teeth of a member of the second epicyclic gear train (7) for mode changing.

2. Transmission according to Claim 1, **characterized in that** the hydraulic actuator (42) comprises a piston (43) and two hydraulic feed chambers (52, 53) located one on each side of the active part of the piston.

3. Transmission according to Claim 2, **characterized in that** the piston is connected to the sliding sleeve by means of a spring washer (50).

4. Transmission according to any one of the preceding claims, **characterized in that** the hydraulic actuator (42) is located axially on one side of the sliding sleeve.

5. Transmission according to Claim 5, **characterized in that** the dog toothing of the sliding sleeve (27) is such that it is in engagement with the two sets of dog teeth each of which is fixed to the members of the mode changing gear train during the change between its two positions.

6. Transmission as claimed in one of the preceding claims, **characterized in that** a retaining device with balls (31) and springs (32) interacts with the sliding sleeve (27) to keep it in position in each of its two positions.

7. Transmission according to Claim 2, **characterized in that** the hydraulic feed chambers are sealed by sealing rings (54, 55, 56, 57, 58).

8. Transmission according to Claim 5, **characterized in that**, in a first position of the sliding sleeve, the dog toothing (28) of the sliding sleeve (27) is in engagement with the toothing of the sun gear (P₇) of the second epicyclic gear train for mode changing, and in a second position the dog toothing (28) of the sliding sleeve (27) is in engagement with the planet carrier (PS₇) of the second epicyclic gear train for mode changing.

## Patentansprüche

1. Stufenloses Leistungsverzweigungsgetriebe mit zwei Betriebsarten für ein mit einem Verbrennungsmotor ausgestattetes Kraftfahrzeug, von der Art, die einen ersten Hauptleistungsverzweigungsweg mit einem zusammengesetzten Planetengetriebezug (3a, 3b), der den Verbrennungsmotor (1) mit den Rädern des Fahrzeugs (2) verbindet, einen zweiten Leistungsverzweigungsweg mit einem ersten einfachen Planetengetriebezug (4), zwei elektrischen Maschinen (5, 6), die einen stufenlosen Drehzahlregler bilden, und mit einem zweiten einfachen Betriebsartwechsel-Planetengetriebezug (7), sowie eine Kopplungs-/Entkopplungseinheit (16, 17) enthält, die fähig ist, ein Organ des zweiten Betriebsartwechsel-Planetengetriebezugs je nach der Betriebsart zu blockieren oder freizugeben, **dadurch gekennzeichnet, dass** die Kopplungs-/Entkopplungseinheit eine mit einer Klauenzahnung (28) versehene Schiebemuffe (27), die von einem Hydraulikzylinder (42) in Translationsrichtung verschoben werden kann, und zwei Einheiten von Klauenzähnen (24, 26) enthält, die je mit einem Organ des zweiten Betriebsartwechsel-Planetengetriebezugs (7) fest verbunden sind, wobei die Schiebemuffe (27) konfiguriert ist, um zwei Stellungen einnehmen zu können, in jeder von denen die Klauenzahnung der Schiebemuffe mit einer einzigen Einheit von Klauenzähnen eines Organs des zweiten Betriebsartwechsel-Planetengetriebezugs (7) in Eingriff ist.

2. Getriebe nach Anspruch 1, **dadurch gekennzeichnet, dass** der Hydraulikzylinder (42) einen Kolben (43) und zwei Hydraulikversorgungskammern (52, 53) enthält, die sich zu beiden Seiten des aktiven Bereichs des Kolbens befinden.

3. Getriebe nach Anspruch 2, **dadurch gekennzeichnet, dass** der Kolben mit der Schiebemuffe über eine elastische Scheibe (50) verbunden ist.

4. Getriebe nach einem der vorhergehenden Ansprüche, **dadurch gekennzeichnet, dass** der Hydraulikzylinder (42) sich axial auf einer Seite der Schiebemuffe befindet.

5. Getriebe nach einem der vorhergehenden Ansprüche, **dadurch gekennzeichnet, dass** die Klauenzahnung der Schiebemuffe (27) so ist, dass sie beim ihrem Übergang zwischen ihren zwei Stellungen mit den zwei Einheiten von Klauenzähnen in Eingriff steht, die je mit den Organen des Betriebsartwechselzugs fest verbunden sind.

6. Getriebe nach einem der vorhergehenden Ansprüche, **dadurch gekennzeichnet, dass** eine Haltevorrichtung mit Kugeln (31) und Federn (32) mit der Schiebemuffe (27) zusammenwirkt, um sie in jeder ihrer zwei Stellungen zu halten.

7. Getriebe nach Anspruch 2, **dadurch gekennzeichnet, dass** die Dichtheit der hydraulischen Versorgungskammern von Dichtringen (54, 55, 56, 57, 58) gewährleistet wird.

8. Getriebe nach Anspruch 5, **dadurch gekennzeichnet, dass** in einer ersten Stellung der Schiebemuffe die Klauenzahnung (28) der Schiebemuffe (27) mit der Zahnung des Planetenrads (P₇) des zweiten Betriebswechsel-Planetengetriebezugs und in einer zweiten Stellung die Klauenzahnung (28) der Schiebemuffe (27) mit dem Planetenträger (PS₇) des zweiten Betriebsartwechsel-Planetengetriebezugs in Eingriff steht.
